(19)

**Europäisches Patentamt**
**European Patent Office**
**Office européen des brevets**

(11) **EP 2 112 569 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(51) Int Cl.:
*G05B 13/02* *(2006.01)*

(21) Anmeldenummer: **09155031.9**

(22) Anmeldetag: **12.03.2009**

(54) **Verfahren zum rechnergestützten Lernen einer Steuerung und/oder Regelung eines technischen Systems**

Method for computer-supported learning of a control and/or regulation of a technical system

Procédé d'apprentissage assisté par ordinateur d'une commande et/ou d'un réglage d'un système technique

(84) Benannte Vertragsstaaten:
**CH DE GB LI SE**

(30) Priorität: **23.04.2008 DE 102008020380**

(43) Veröffentlichungstag der Anmeldung:
**28.10.2009 Patentblatt 2009/44**

(73) Patentinhaber: **Siemens Aktiengesellschaft**
**80333 München (DE)**

(72) Erfinder:
• **Schneegaß, Daniel**
**1053 WR Amsterdam (NL)**
• **Udluft, Steffen**
**82223 Eichenau (DE)**

(56) Entgegenhaltungen:
• **E. Delage; S. Mannor: "Percentile Optimization in Uncertain Markov Decision Processes with Application to Efficient Exploration", Proc. of the International Conference on Machine Learning, 2007, Seiten 225-232, XP002619939, Gefunden im Internet: URL:http://www.machinelearning.org/proceed ings/icml2007/papers/495.pdf [gefunden am 2010-09-23]**
• **Eric Tuttle and Zoubin Ghahramani: "Propagating Uncertainty in POMDP Value Iteration with Gaussian Processes", , 30. November 2004 (2004-11-30), Seiten 1-11, XP002619940, Gefunden im Internet: URL:http://eprints.pascal-network.org/arch ive/00000800/01/gpvalittechrpt.pdf [gefunden am 2010-09-21]**
• **CHANGJIE FAN ET AL: "Bounded Incremental Real-Time Dynamic Programming", FRONTIERS IN THE CONVERGENCE OF BIOSCIENCE AND INFORMATION TECHNOLOGIES, 2007. FBIT 2007, IEEE, PISCATAWAY, NJ, USA, 11. Oktober 2007 (2007-10-11), Seiten 637-644, XP031254461, ISBN: 978-0-7695-2999-8**
• **BAOHUA LI ET AL: "Approximate Robust Policy Iteration for Discounted Infinite-Horizon Markov Decision Processes with Uncertain Stationary Parametric Transition Matrices", NEURAL NETWORKS, 2007. IJCNN 2007. INTERNATIONAL JOINT CONFERENCE ON, IEEE, PISCATAWAY, NJ, USA, 1. August 2007 (2007-08-01), Seiten 2052-2057, XP031154910, ISBN: 978-1-4244-1379-9**

EP 2 112 569 B1

**Beschreibung**

Die Erfindung betrifft ein Verfahren zum rechnergestützten Lernen einer Steuerung und/oder Regelung eines technischen Systems sowie ein entsprechendes Verfahren zum Betrieb eines technischen Systems und ein Computerprogrammprodukt.

Aus dem Stand der Technik sind verschiedene Verfahren bekannt, mit denen basierend auf vorab ermittelten Trainingsdaten, welche den Betrieb eines technischen Systems repräsentieren, ein Optimalbetrieb dieses Systems modelliert werden kann. Das technische System wird dabei durch Zustände, Aktionen und Folgezustände beschrieben, wobei die Zustände bestimmte technische Parameter bzw. beobachteten Zustandsgrößen des technischen Systems sind, und die Aktionen entsprechende Stellgrößen repräsentieren, welche am technischen System variiert werden können. Aus dem Stand der Technik sind allgemein bestärkende Lernverfahren (englisch: Reinforcement Learning) bekannt, welche für ein technisches System basierend auf Trainingsdaten eine optimale Aktionsauswahlregel gemäß einem Optimalitätskriterium lernen. Die bekannten Verfahren haben den Nachteil, dass sie keine Aussagen im Hinblick auf die statistische Unsicherheit einer gelernten Aktionsauswahlregel liefern. Solche Unsicherheiten sind insbesondere bei einer kleinen Menge an Trainingsdaten sehr groß.

Die Druckschrift E. Delage; S. Mannor: "Percentile Optimization in Uncertain Markov Decision Processes with Application to Efficient Exploration", Proc. of the International Conference on Machine Learning 2007, Seiten 225-232, beschreibt die mathematische Formulierung von Markov-Entscheidungs-Prozessen unter Berücksichtigung von Unsicherheiten in den Parametern der Prozesse. Dabei wird die Unsicherheit in Bezug auf Belohnungen und die Unsicherheit in Bezug auf Transitions-Parameter betrachtet.

Die Druckschrift Eric Tuttle and Zoubin Ghahramani: "Propagating Uncertainty in POMPD Value Iteration with Gaussian Processes" 30. November 2004, Seiten 1 - 11 offenbart teilweise beobachtbare Markov-Entscheidungs-Prozesse, bei denen eine Qualitätsfunktion basierend auf einen Gaußschen Prozess modelliert wird.

Aufgabe der Erfindung ist es, ein Verfahren zum Lernen der Steuerung und/oder Regelung eines technischen Betriebs zu schaffen, welches die statistische Unsicherheit der beim Lernen verwendeten Trainingsdaten berücksichtigt.

Diese Aufgabe wird durch die unabhängigen Patentansprüche gelöst. Weiterbildungen der Erfindung sind in den abhängigen Ansprüchen definiert.

In dem erfindungsgemäßen Verfahren wird rechnergestützt eine Steuerung bzw. Regelung eines technischen Systems gelernt, wobei der Betrieb des technischen Systems charakterisiert ist durch Zustände, welche das technische System im Betrieb einnehmen kann, und Aktionen, welche während des Betriebs des technischen Systems ausgeführt werden und einen jeweiligen Zustand des technischen Systems in einen Folgezustand überführen. In dem erfindungsgemäßen Verfahren werden basierend auf im Betrieb des technischen Systems erfassten Trainingsdaten umfassend Zustände, Aktionen und Folgezustände eine Qualitätsfunktion und eine Aktionsauswahlregel gelernt, wobei das Lernen insbesondere mit einem bestärkenden Lernverfahren erfolgt. Die Qualitätsfunktion modelliert dabei einen Optimalbetrieb des technischen Systems im Hinblick auf für das technische System spezifische Kriterien und die Aktionsauswahlregel gibt im Betrieb des technischen Systems für einen jeweiligen Zustand des technischen Systems die bevorzugt auszuführende Aktion oder auszuführenden Aktionen an.

In dem erfindungsgemäßen Verfahren wird während des Lernens der Qualitätsfunktion und der Aktionsauswahlregel ein Maß für die statistische Unsicherheit der Qualitätsfunktion mittels einer Unsicherheitspropagation ermittelt und in Abhängigkeit von dem Maß für die statistische Unsicherheit und einem Sicherheitsparameter, der einer statistischen Mindestanforderung an die Qualitätsfunktion entspricht, wird eine modifizierte Qualitätsfunktion bestimmt. Unter einem Maß für die statistische Unsicherheit wird insbesondere ein Maß für die statistische Varianz bzw. Standardabweichung verstanden, vorzugsweise die statistische Varianz bzw. Standardabweichung selbst. Die Erfindung kombiniert ein Lernverfahren mit statistischer Unsicherheit, wobei basierend auf an sich bekannter Unsicherheitspropagation (englisch: uncertainty propagation), welche auch als Gaußsche Fehlerfortpflanzung bezeichnet wird, ein Maß für die statistische Unsicherheit der Qualitätsfunktion ermittelt wird. Basierend auf der daraus bestimmten modifizierten Qualitätsfunktion wird die Aktionsauswahlregel gelernt.

Das erfindungsgemäße Verfahren hat den Vorteil, dass statistische Unsicherheit berücksichtigt wird, wobei durch eine entsprechende Variation des Sicherheitsparameters verschiedene Szenarien zum Betrieb des technischen Systems eingestellt werden können. Das Verfahren liefert insbesondere eine neue sicherheitsoptimale Aktionsauswahlregel, welche die Performanz des technischen Systems unter Berücksichtigung der statistischen Unsicherheit maximiert.

Das Lernen der Qualitätsfunktion und der Aktionsauswahlregel erfolgt in einer bevorzugten Variante des erfindungsgemäßen Verfahrens unter Berücksichtigung von Bewertungen und Zustands-Aktions-Wahrscheinlichkeiten. Eine jeweilige Bewertung bewertet dabei die Qualität einer Kombination aus Zustand, in dem Zustand ausgeführter Aktion und Folgezustand im Hinblick auf den Optimalbetrieb des technischen Systems und wird oftmals auch als Reward bezeichnet. Eine Zustands-Aktions-Wahrscheinlichkeit gibt in Abhängigkeit von einem Zustand und der in dem Zustand ausgeführten Aktion die Wahrscheinlichkeit eines Folgezustands an. Vorzugsweise werden dabei die Zustands-Aktions-Wahrscheinlichkeiten als eine Zustands-Aktions-Wahrscheinlichkeitsverteilung modelliert und/oder die Bewertungen werden als eine Bewertungs-Wahrscheinlichkeits-verteilung modelliert. In einer Variante des erfindungsgemäßen Verfahrens erfolgt die Modellierung der Zustands-Aktions-Wahrscheinlichkeitsverteilung bzw. der Bewertungs-Wahrscheinlichkeitsverteilung als relative Häufigkeiten aus den Trainingsdaten. Werden Bewertungen beim Lernen berücksichtigt, sind solche Bewertungen in den Trainingsdaten enthalten bzw. es existiert eine Funktion, welche in Abhängigkeit von Zustand, Aktion und Folgezustand eine entsprechende Bewertung ausgibt.

Anstatt des frequentistischen Ansatzes basierend auf relativen Häufigkeiten zur Modellierung einer Wahrscheinlichkeitsverteilung kann in einer weiteren Variante der Erfindung auch ein Bayesianischer Ansatz gewählt werden, bei dem die Zustands-Aktions-Wahrscheinlichkeitsverteilung und/oder die Bewertungs-Wahrscheinlichkeitsverteilung basierend auf einer A-priori-Verteilung mit A-posteriori-Parametern abgeschätzt wird, wobei die A-posteriori-Parameter von den Trainingsdaten abhängen. Als A-priori-Verteilung kann insbesondere die Dirichlet-Verteilung und/oder eine Normalverteilung verwendet werden.

In einer besonders bevorzugten Ausführungsform wird die an sich bekannte Bellman-Iteration zum Lernen der Qualitätsfunktion und der Aktionsauswahlregel verwendet. Bei der bekannten Bellman-Iteration wird in jedem Iterationsschritt eine neue Qualitätsfunktion ermittelt, wobei erfindungsgemäß nunmehr zusätzlich in dem jeweiligen Iterationsschritt ein neues Maß für die statistische Unsicherheit der Qualitätsfunktion und hierdurch eine neue modifizierte Qualitätsfunktion bestimmt wird. Die Bestimmung des neuen Maßes für die statistische Unsicherheit erfolgt dabei insbesondere dadurch, dass in jedem Iterationsschritt der Bellman-Iteration eine Kovarianzmatrix in Abhängigkeit von der in dem Iterationsschritt bestimmten Qualitätsfunktion, den Zustands-Aktions-Wahrscheinlichkeiten und den Bewertungen ermittelt wird.

In einer besonders bevorzugten Variante der Erfindung ist die zu lernende Aktionsauswahlregel eine stochastische Aktionsauswahlregel, welche für einen Zustand des technischen Systems eine Wahrscheinlichkeitsverteilung für die ausführbaren Aktionen angibt. Wird zum Lernen die oben erwähnte Bellman-Iteration verwendet, wird in jedem Iterationsschritt als neue Wahrscheinlichkeitsverteilung für die ausführbaren Aktionen eine Wahrscheinlichkeitsverteilung ermittelt, welche die Wahrscheinlichkeitsverteilung des letzten Iterationsschritts derart modifiziert, dass der Aktion, welche den Wert der modifizierten Qualitätsfunktion maximiert, eine höhere Wahrscheinlichkeit zugewiesen wird.

In einer weiteren, besonders bevorzugten Ausführungsform der Erfindung liefert das Verfahren basierend auf dem Sicherheitsparameter auch die statistische Mindestanforderung an die Qualitätsfunktion. Es ist zwar bekannt, dass der Sicherheitsparameter mit einer statistischen Mindestanforderung korreliert, jedoch ist dieser Zusammenhang nicht explizit angegeben. Eine Ausführungsform der Erfindung ermöglicht es jedoch, diesen Zusammenhang explizit zu berechnen. Die statistische Mindestanforderung wird dabei vorzugsweise durch einen Mindestqualitätsfunktionswert und einen Wahrscheinlichkeitswert repräsentiert, wobei der Wahrscheinlichkeitswert angibt, mit welcher Wahrscheinlichkeit der Wert der Qualitätsfunktion größer oder gleich dem Mindestqualitätsfunktionswert ist. Vorzugsweise wird zur Ermittlung der statistischen Mindestanforderung an die Qualitätsfunktion eine Gaußsche Normalverteilung für die Qualitätsfunktion angenommen.

Das erfindungsgemäße Verfahren kann für beliebige technische Systeme eingesetzt werden. In einer besonders bevorzugten Variante wird das Verfahren zum Lernen einer Steuerung bzw. Regelung einer Turbine, insbesondere einer Gasturbine, verwendet. Die Zustände der Gasturbine sind dabei beispielsweise die Menge an zugeführtem Treibstoff und/oder das Brummen der Turbine. Aktionen sind dabei z.B. die Veränderung der zugeführten Treibstoffmenge bzw. eine Veränderung an den Einstellungen der Schaufeln der Turbine.

Neben dem oben beschriebenen Lernverfahren umfasst die Erfindung ferner ein Verfahren zum Betrieb eines technischen Systems, wobei das technische System basierend auf einer Steuerung bzw. Regelung betrieben wird, welche mit einer beliebigen Variante des oben beschriebenen Lernverfahrens gelernt wurde. Dabei wird mit der gelernten Aktionsauswahlregel in einem jeweiligen Zustand des technischen Systems die auszuführende Aktion ausgewählt. Bei einer stochastischen Aktionsauswahlregel erfolgt dies z.B. durch zufällige Auswahl der Aktionen gemäß der jeweiligen Wahrscheinlichkeit. In einer bevorzugten Variante dieses Betriebs wird das obige Lernverfahren dabei in Abständen wiederholt, wobei bei jeder Wiederholung die neu vom technischen System eingenommenen Zustände und durchgeführten Aktionen als Trainingsdaten berücksichtigt werden.

Neben dem oben beschriebenen Verfahren betrifft die Erfindung ferner ein Computerprogrammprodukt mit einem auf einem maschinenlesbaren Träger gespeicherten Programmcode zur Durchführung der erfindungsgemäßen Verfahren, wenn das Programm auf einem Rechner abläuft.

Ausführungsbeispiele der Erfindung werden nachfolgend anhand der beigefügten Figuren detailliert beschrieben.

Es zeigen:

Fig. 1    ein Diagramm, welches die Bedeutung des Sicher-heitsparameters für eine Q-Funktion in einer Aus-führungsform der Erfindung verdeutlicht; und

Fig. 2    eine Tabelle, welche Ergebnisse einer Ausführungs-form des erfindungsgemäßen Verfahrens für das Bei-spiel einer Gasturbine zeigt.

Nachfolgend wird die Erfindung an dem Beispiel eines technischen Systems erläutert, welches durch einen Zustandsraum S und einen Aktionsraum A charakterisiert ist. Der Zustandsraum stellt eine Vielzahl von diskreten bzw. kontinuierlichen Zuständen in der Form von Parametern des technischen Systems dar, welche das technische System während seines Betriebs charakterisieren. Bei einer Gasturbine können diese Parameter beispielsweise die Menge an zugeführtem Treibstoff oder das Brummen der Turbine sein. Der Aktionsraum bezeichnet die möglichen, am technischen System durchführbaren Aktionen, wobei mit den Aktionen die Zustände des technischen Systems verändert werden können. Eine Aktion kann die Veränderung einer Stellgröße des technischen Systems sein, beispielsweise eine Veränderung der Position von Leitschaufeln einer Gasturbine, eine Veränderung der Treibstoffzufuhr und dergleichen.

Die Dynamik des technischen Systems wird in der hier beschriebenen Ausführungsform als Markov-Entscheidungs-Prozess durch eine Transitionswahrscheinlichkeitsverteilung $P_T : S \times A \times S \rightarrow [0,1]$ charakterisiert, welche vom aktuellen Zustand des technischen Systems, der im aktuellen Zustand durchgeführten Aktion sowie des daraus resultierenden Folgezustands des technischen Systems abhängt. In der hier beschriebenen Ausführungsform des erfindungsgemäßen Verfahrens wird rechnergestützt basierend auf Trainingsdaten eine Aktionsauswahlregel gelernt, wobei eine Aktionsauswahlregel im Allgemeinen angibt, welche Aktion in einem vorgegebenen Zustand des technischen Systems bevorzugt auszuführen ist. Die Aktionsauswahlregel kann hierbei deterministisch sein, d.h. es wird eine bestimmte Aktion durch die Regel festgelegt, sie kann jedoch auch stochastisch sein, d.h. die Aktionsauswahlregel gibt eine Wahrscheinlichkeitsverteilung der durchzuführenden Aktionen ausgehend von einem Zustand an. Ziel des erfindungsgemäßen Verfahrens ist das Lernen einer sog. sicherheitsoptimalen Aktionsauswahlregel, welche nicht notwendigerweise im Hinblick auf die erwartete Performanz optimal ist, sondern einer statistischen Mindestanforderung an die Aktionsauswahlregel genügt. Auf diese Weise können Aktionsauswahlregeln gelernt werden, welche zwar nicht das Optimalitätskriterium der maximalen erwarteten Performanz erfüllen, jedoch eine garantierte Performanz maximieren.

Zunächst wird nachfolgend ein bestärkendes Lernverfahren gemäß dem Stand der Technik erläutert, bei dem die Aktionsauswahlregel basierend auf dem entsprechenden Optimalitätskriterium gelernt wird. Das Optimalitätskriterium wird dabei durch eine entsprechende Bewertung R repräsentiert, wobei die Bewertung für einen Zustand, die in diesem Zustand durchgeführte Aktion a und den Folgezustand s' angibt, wie erstrebenswert die durchgeführte Aktion a im Hinblick auf den Optimalbetrieb des technischen Systems ist. Der Optimalbetrieb kann in Abhängigkeit von dem betrachteten technischen System beliebig festgelegt sein, beispielsweise sind Kriterien für einen solchen Betrieb, dass keine Zustände auftreten, die zu einer Beschädigung bzw. Zerstörung des technischen Systems führen, bzw. dass ein optimaler Wirkungsgrad im Betrieb des technischen Systems erreicht wird. Bei einer Gasturbine könnte der Optimalbetrieb beispielsweise dadurch spezifiziert sein, dass ein hoher Wirkungsgrad erreicht wird, ohne dass ein Brummen der Turbine auftritt.

Beim bestärkenden Lernen einer optimalen Aktionsauswahlregel wird die erwartete diskontierte Summe von zukünftigen Bewertungen betrachtet, welche wie folgt lautet:

$$V^{\pi}(s) = E_{\mathbf{s}}^{\pi}\left(\sum_{i=0}^{\infty} \gamma^i R\left(s^{(i)}, \pi\left(s^{(i)}\right), s^{(i+1)}\right)\right)$$

Diese sog. Value-Funktion muss über den Raum der Aktionsauswahlregeln $\Pi \in (S \rightarrow A)$ für alle möglichen Zustände s maximiert werden, wobei $0 < \gamma < 1$ der Diskontierungsfaktor, s' der Folgezustand von s und $\pi \in \Pi$ die verwendete Aktionsauswahlregel ist. Ferner gilt $\mathbf{s} = \{s', s'', ..., s^{(i)}, ...\}$. Als ein Zwischenschritt wird eine sog. Q-Funktion $Q^{\pi}(s,a)$ konstruiert, welche einer Ausführungsform der Qualitätsfunktion im Sinne von Anspruch 1 entspricht. Die Q-Funktion hängt vom aktuellen Zustand des technischen Systems und der in diesem Zustand gewählten Aktion ab. Die optimale Qualitätsfunktion $Q^* = Q^{\pi*}$ wird als eine Lösung der sog. Bellman-Optimalitäts-Gleichung bestimmt, welche wie folgt lautet:

$$Q^*(s,a) = E_{s'}\left(R(s,a,s') + \gamma V^*(s')\right) = E_{s'}\left(R(s,a,s') + \gamma \max_{a'} Q^*(s',a')\right)$$

Somit ist im Hinblick auf das betrachtete Optimalitätskriterium die beste Aktionsauswahlregel gegeben durch:

$$\pi^{*}(s) = \arg\max_a Q^{*}(s, a)$$

Die Bellman-Optimalitäts-Gleichung wird durch die hinlänglich aus dem Stand der Technik bekannte Bellman-Iteration gelöst, welche weiter unten noch näher erläutert wird. Im Folgenden wird T als der Bellman-Operator definiert, der für jede beliebige Qualitätsfunktion Q wie folgt lautet:

$$(TQ)(s, a) = E_{s'}\left(R(s, a, s') + \gamma \max_{a'} Q(s', a')\right)$$

In der nachfolgend beschriebenen Ausführungsform der Erfindung wird zusätzlich die statistische Unsicherheit betrachtet, welche sich aus den Unsicherheiten der Messungen im technischen System ergibt, welche als Trainingsdaten zur Bestimmung einer Aktionsauswahlregel für das technische System verwendet werden.
Diese statistischen Unsicherheiten führen zu einer Unsicherheit der betrachteten Q-Funktion und somit der gelernten Aktionsauswahlregel. Die beim bestärkenden Lernen vorhandene Unsicherheit resultiert aus dem Nichtwissen über das wahre Verhalten des technischen Systems, d.h. dem wahren Markov-Entscheidungs-Prozess, der dem technischen System zu Grunde liegt. Je mehr Beobachtungen in Form von Trainingsdaten über das technische System vorliegen, desto mehr Informationen hat man über den Markov-Entscheidungs-Prozess. Je größer die Stochastizität ist, desto mehr Unsicherheit verbleibt in Bezug auf den Markov-Entscheidungs-Prozess für eine vorgegebene Anzahl an Beobachtungen.
Die Unsicherheit der Messungen basierend auf den Trainingsdaten, d.h. die Unsicherheit der Transitionen von einem Zustand auf den nächsten unter Anwendung einer Aktion und der damit verbundenen Bewertung, wird in der nachfolgend beschriebenen Variante der Erfindung in die Q-Funktion propagiert, und zwar durch Unsicherheitspropagation. Das Prinzip der Unsicherheitspropagation, auch als Gaußsche Propagation von Unsicherheiten bzw. Gaußsche Fehlerfortpflanzung bezeichnet, ist hinlänglich aus dem Stand der Technik bekannt und beruht auf einer Taylor-Entwicklung ersten Grades um den jeweiligen geschätzten Punkt. Dabei wird die Unsicherheit der Funktionswerte $f(x)$ mit $f : R^m \to R^n$ bei vorgegebener Unsicherheit der Argumente x basierend auf folgender Kovarianz berechnet:

$$Cov(f) = Cov(f, f) = DCov(x)D^T$$

Dabei bedeutet $D_{i,j} = \dfrac{\partial f_i}{\partial x_j}$ die Jacobi-Matrix von f nach ihren Argumenten x. Mit $Cov(x) = Cov(x, x)$ wird die Kovarianz der Argumente x bezeichnet, die wiederum von der Unsicherheit von x abhängt. Die Funktion f verfügt dann über die symmetrische und positiv definite Kovarianz und Unsicherheit $Cov(f)$.
In der hier beschriebenen Ausführungsform des erfindungsgemäßen Verfahrens wird die vorhandene Unsicherheit in den Messungen in das bestärkende Lernen durch das Anwenden der Gaußschen Fehlerfortpflanzung auf die Bellman-Iteration implementiert.
Die Bellman-Iteration lautet für den m-ten Iterationsschritt allgemein wie folgt:

$$Q^m(s_i, a_j) = (TQ^{m-1})(s_i, a_j) = \sum_{k=1}^{|S|} P(s_k | s_i, a_j)\left(R(s_i, a_j, s_k) + \gamma V^{m-1}(s_k)\right)$$

Es wird hierbei ein diskreter Markov-Entscheidungs-Prozess betrachtet, die Erfindung ist jedoch auch auf nicht diskrete Markov-Entscheidungs-Prozesse anwendbar. Zur Bestimmung der optimalen Aktionsauswahlregel wird nach Aktionen mit maximalem Q-Wert gesucht. Das heißt, es gilt: $V^m(s) = Q^m(s, \pi(s))$, wobei $\pi$ die verwendete Aktionsauswahl-

regel darstellt und $V^m(s)=\max_{a\in A}Q^m(s,a)$ gilt. Es wird hierbei eine endliche Anzahl an Zuständen $s_i, i \in \{1,...,|S|\}$ und Aktionen $a_i, i \in \{1,...,|A|\}$ angenommen. Die Bellman-Iteration konvergiert für $m \to \infty$ zu der optimalen Q-Funktion für die abgeschätzte Zustands-Aktions-Wahrscheinlichkeitsverteilung P (entspricht der Transitionswahrscheinlichkeitsverteilung in einen Folgezustand bei gegebenem Zustand und gegebener Aktion) und die Bewertungs-Wahrscheinlichkeitsverteilung R. Im Allgemeinen stochastischen Fall, bei dem $\pi$ eine Wahrscheinlichkeitsverteilung der in dem Zustand s

ausführbaren Aktionen $a_i$ repräsentiert, gilt: $V^m(s) = \sum_{i=1}^{|A|} \pi(s,a_i)Q^m(s,a_i)$, wobei $\pi(s,a)$ die Wahr-

scheinlichkeit der Wahl der Aktion a im Zustand s ist.

Um nunmehr eine vorhandene Unsicherheit in die Q-Funktion zu implementieren, wird - wie bereits oben erwähnt - die Technik der Unsicherheitspropagation bzw. Gaußschen Fehlerfortpflanzung parallel zur Bellman-Iteration angewendet. Mit gegebenen Kovarianzmatrizen $Cov(P)$, $Cov(R)$ und $Cov(P,R)$ für die Übergangswahrscheinlichkeiten P und die Bewertungen R erhält man folgende anfängliche vollständige Kovarianzmatrix:

$$Cov(Q^0,P,R)=\begin{pmatrix} 0 & 0 & 0 \\ 0 & Cov(P) & Cov(P,R) \\ 0 & Cov(P,R)^T & Cov(R) \end{pmatrix}$$

Nach dem m-ten Bellman-Iterationsschritt lautet die vollständige Kovarianzmatrix basierend auf der Gaußschen Fehlerfortpflanzung wie folgt:

$$Cov(Q^m,P,R) = D^{m-1}Cov(Q^{m-1},P,R)(D^{m-1})^T$$

Hierbei ist $D^m$ die Jacobi-Matrix, welche wie folgt lautet:

$$D^m = \begin{pmatrix} D^m_{Q,Q} & D^m_{Q,P} & D^m_{Q,R} \\ 0 & I & 0 \\ 0 & 0 & I \end{pmatrix}$$

$$\left(D^m_{Q,Q}\right)_{(i,j),(k,l)} = \gamma\pi(s_k,a_l)P(s_k|s_i,a_j)$$

$$\left(D^m_{Q,P}\right)_{(i,j),(l,n,k)} = \delta_{il}\delta_{jn}\left(R(s_i,a_j,s_k)+\gamma V^m(s_k)\right)$$

$$\left(D^m_{Q,R}\right)_{(i,j),(l,n,k)} = \delta_{il}\delta_{jn}P(s_k|s_i,a_j)$$

Auf diese Weise werden für jeden Bellman-Iterationsschritt die entsprechenden Kovarianzen zwischen der Q-Funktion, den Transitionswahrscheinlichkeiten P und den Bewertungen R ermittelt. Um nunmehr die Unsicherheit der Messungen im technischen System geeignet zu berücksichtigen, muss eine geeignete, anfängliche Kovarianzmatrix $Cov((P,R))$ vorgegeben werden. Im Folgenden werden alle Übergänge von unterschiedlichen Zustands-Aktions-Paaren und deren Bewertungen als unabhängig voneinander angenommen, so dass die Übergänge als Multinomial-Verteilungen modelliert werden können. In einer Ausführungsform wird ein Bayesianischer Ansatz zur Modellierung der Multinomial-Verteilungen verwendet. Es wird hierbei von einer A-priori-Verteilung $P(s_k|s_i,a_j)$ über den Parameter-Raum für vorgegebenes i und j ausgegangen. In einer besonderen Ausführungsform wird als A-priori-Verteilung die Dirichlet-Verteilung mit folgender Dichte verwendet:

$$P\left(P\left(s_1|s_i,a_j\right),...,P\left(s_{|S|}|s_i,a_j\right)\right)_{\alpha_{1,i,j},...,\alpha_{|S|,i,j}} = \frac{\Gamma\left(\alpha_{i,j}\right)}{\Pi_{k=1}^{|S|}\Gamma\left(\alpha_{k,i,j}\right)}\prod_{k=1}^{|S|}P\left(s_k|s_i,a_j\right)^{\alpha_{k,i,j}-1}$$

$\alpha_{i,j} = \sum_{k=1}^{|S|}\alpha_{k,i,j}$ ist der sog. "Conjugate Prior" mit folgenden A-posteriori-Parametern:

$\alpha_{k,i,j}^d = \alpha_{k,i,j} + n_{s_k|s_i,a_j}$ . Dabei liegen gemäß den Trainingsdaten $n_s{k|s}i,aj$ beobachtete Transitionen von $s_i$

nach $s_k$ bei Durchführung der Aktion $a_j$ vor. Die anfängliche Kovarianzmatrix für P lautet dann wie folgt:

$$\left(Cov(P)\right)_{(i,j,k),(l,m,n)} = \delta_{i,l}\delta_{j,m}\frac{\alpha_{k,i,j}^d\left(\delta_{k,n}\alpha_{i,j}^d - \alpha_{n,i,j}^d\right)}{\left(\alpha_{i,j}^d\right)^2\left(\alpha_{i,j}^d+1\right)}$$

Dabei wird von dem A-posteriori-Schätzer $P\left(s_k|s_i,a_j\right) = \alpha_{k,i,j}^d / \alpha_{i,j}^d$ für die Transistionswahrscheinlichkeiten ausgegangen. Auf ähnliche Weise werden die Bewertungen als normal verteilt mit der Normal-Gamma-Verteilung als Conjugate Prior angenommen.

Anstatt der Bestimmung der anfänglichen Kovarianzen basierend auf dem Bayesianischen Ansatz kann auch der frequentistische Ansatz zur Bestimmung der anfänglichen Kovarianzen verwendet werden. Im frequentistischen Ansatz wird $P(s'|s,a)$ durch die relative Häufigkeit der beobachteten Transitionen modelliert, d.h. es gilt

$$P\left(s_k|s_i,a_j\right) = \frac{n_{s_k|s_i,a_j}}{n_{s_i,a_j}} .$$

Die Kovarianzen ergeben sich dann zu:

$$\left(Cov(P)\right)_{(i,j,k),(l,m,n)} = \delta_{i,l}\delta_{j,m}\frac{P\left(s_k|s_i,a_j\right)\left(\delta_{k,n} - P\left(s_n|s_i,a_j\right)\right)}{n_{s_i,a_j}-1}$$

Eine wesentliche Vereinfachung stellt dabei die Poisson-Näherung dar, da $Cov(P(\cdot|s_i,a_j))$ dadurch zu einer diagonalen Matrix wird. Die Poisson-Näherung besteht in folgender Schätzung:

$$\left(Cov(P)\right)_{(i,j,k),(l,m,n)} = \delta_{i,l}\,\delta_{j,m}\,\delta_{k,n}\,\frac{P\!\left(s_k\middle|s_i,a_j\right)}{n_{s_i,a_j}-1}$$

Diese Näherung kann etwa für große Zustandsräume interessant sein, da die Unsicherheitspropagation wesentlich schneller ablaufen kann.

Zur Modellierung der Bewertungen wird beim frequentistischen Ansatz davon ausgegangen, dass auch die Bewertungen verschiedener Transitionen, die vom gleichen Zustands-Aktions-Paar ausgehen, statistisch voneinander unabhängig sind. Die frequentistische Näherung besteht dann in der durchschnittlich beobachteten Bewertung, wobei $Cov(R)$ zu einer diagonalen Matrix wird und folgende Form annimmt:

$$Cov\!\left(R\!\left(s_i,a_j,s_k\right)\right) = \frac{\mathrm{var}\!\left(R\!\left(s_i,a_j,s_k\right)\right)}{n_{s_k\middle|s_i,a_j}-1}$$

Der frequentistische Ansatz sowie der Bayesianische Ansatz unter Verwendung eines Conjugate-Priors haben den Vorteil, dass sie rechnergestützt gut verarbeitbar sind. Jedoch ist das erfindungsgemäße Verfahren nicht auf diese Ansätze beschränkt und jede aussagekräftige Kovarianzmatrix $Cov((P,R))$ ist erlaubt. Insbesondere kann die Verwendung von Kovarianzen zwischen den Transitionen beginnend mit unterschiedlichen Zustands-Aktions-Paaren und zwischen Zuständen und Bewertungen sinnvoll und aussagekräftig sein, falls es ein Maß für eine Nachbarschaft im Zustands-Aktions-Raum gibt.

Es kann nunmehr für einen finiten Markov-Entscheidungs-Prozess $M = (S,A,P,R)$ mit Diskontierungsfaktor $0<\gamma<1$ und $C^0$ als beliebige anfängliche symmetrische und positiv definite Kovarianzmatrix bewiesen werden, dass die Funktion:

$$\left(Q^m,C^m\right) = \left(TQ^{m-1},\,D^{m-1}C^{m-1}\left(D^{m-1}\right)^{T}\right)$$

einen einzigen Fixpunkt $(Q^*,C^*)$ fast immer unabhängig von dem anfänglichen Q für die Bellman-Iteration bereitstellt.

Hat man folglich den Fixpunkt der Bellman-Iteration, d.h. die konvergierte Q-Funktion $Q^*$, erreicht, ergibt sich auch ein Fixpunkt für die Kovarianz, der gegeben ist durch $Cov(Q^*)$. Es wird nunmehr die Unsicherheit der durch die Bellman-Iteration ermittelten Q-Funktion $Q^*$ durch die diagonalen Einträge der Kovarianzmatrix angegeben, da die Diagonale die Varianzen der Q-Werte darstellt. Es wird somit folgende Unsicherheit für $Q^*$ angegeben:

$$\sigma Q^* = \sqrt{diag\!\left(Cov\!\left(Q^*\right)\right)}$$

Erfindungsgemäß ist ein einstellbarer Sicherheitsparameter $\xi$ vorgesehen, der eine je nach Anwendungsfall erwünschte statistische Mindestanforderung an die Q-Funktion repräsentiert. Basierend auf diesem Parameter $\xi$, der in Abhängigkeit von der Verteilung von Q eine Wahrscheinlichkeit repräsentiert, wird nunmehr folgende modifizierten Q-Funktion betrachtet:

$$Q_u^*(s,a) = \left(Q^* - \xi\sigma Q^*\right)(s,a)$$

Diese Q-Funktion stellt ein wichtiges Ergebnis des erfindungsgemäßen Verfahrens dar. Sie liefert die garantierte erwartete Performanz beim Ausführen der Aktion $a_j$ im Zustand $s_i$, wenn der Aktionsauswahlregel $\pi^*(s) = \arg\max_a Q^*(s,a)$ strikt gefolgt wird. Geht man von einer Normalverteilung von Q aus, erhält man bei einer Wahl von $\xi = 2$ eine garantierte Performanz $Q_u^*$ mit einer Wahrscheinlichkeit $P(2) \approx 0{,}977$. Dies bedeutet, dass mit einer Wahrscheinlichkeit von 97,7 % die Q-Funktion einen Wert annimmt, der mindestens so groß ist wie der Wert der Q-Funktion in der Normalverteilung an der Stelle um zwei Standardabweichungen kleiner als der Erwartungswert $Q^*$.

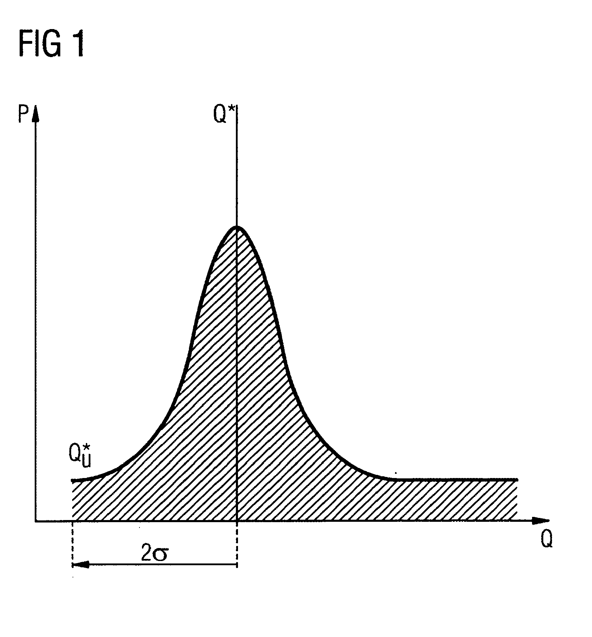

In Fig. 1 ist beispielhaft eine angenommene Normalverteilung für die Q-Funktion wiedergegeben. Fig. 1 zeigt einen Wert von $\xi$, der zweimal der Standardabweichung $\sigma$ der Verteilung entspricht. Der Wert $Q_u^*$ zwei Standardabweichungen links von dem Erwartungswert $Q^*$ entspricht dann der garantierten Performanz dahingehend, dass mit einer Wahrscheinlichkeit von P = 0,977, welche durch die schraffierte Fläche in Fig. 1 angedeutet ist, der Wert der Qualitätsfunktion größer oder gleich $Q_u^*$ ist. Durch die Veränderung des Parameters $\xi$ kann somit die garantierte Mindestperformanz variiert werden. Mit Hilfe der Modifikation der Q-Funktion mit dem Parameter $\xi$ kann nunmehr eine geeignete sicherheitsoptimale Aktionsauswahlregel bestimmt werden, welche die garantierte Performanz maximiert.

Es wird somit nach der Aktionsauswahlregel gesucht, welche in Bezug auf ein zuvor spezifiziertes Konfidenzlevel $P(\xi)$ die garantierte Performanz Z(s,a) maximiert. Das heißt, es wird nach einer Aktionsauswahlregel $\pi$ gesucht, so dass Z maximal wird und gilt:

$$\forall s,a : P\left(\overline{Q}^{\pi}(s,a) > Z(s,a)\right) > P(\xi)$$

Dabei bezeichnet $\overline{Q}^{\pi}$ die wahre Performanzfunktion von $\pi$ und $P(\xi)$ stellt eine vorbestimmte Wahrscheinlichkeit basierend auf dem Sicherheitsparameter $\xi$ dar. Erfindungsgemäß kann eine solche Lösung erreicht werden durch eine Approximation von Z durch $Q_u^{\pi}$ und durch Lösen folgender Relation

$$\pi^{\xi}(s) = \arg\max_{\pi}\max_{a} Q_u^{\pi}(s,a) = \arg\max_{\pi}\max_{a}\left(Q^{\pi} - \xi\sigma Q\pi\right)(s,a)$$

unter der Bedingung, dass $Q^{\pi\xi} = Q^{\xi}$ eine gültige Q-Funktion von $\pi^{\xi}$ ist, d.h. dass gilt:

$$\forall i,j : Q^{\xi}(s_i,a_j) = \sum_{k=1}^{|S|} P\left(s_k|s_i,a_j\right)\left(R(s_i,a_j,s_k) + \gamma Q^{\xi}\left(s_k,\pi^{\xi}(s_k)\right)\right)$$

In Bezug auf die Bellman-Iteration soll Q also ein Fixpunkt sein nicht bezüglich der Value-Funktion als Maximum über alle möglichen Q-Werte, sondern als Maximum über die Q-Werte abzüglich ihrer gewichteten Unsicherheit. Somit wird die Aktionsauswahlregel in jedem Iterationsschritt gewählt zu:

$$\pi^m(s) = \arg\max_{a'}\left(Q^m - \xi\sigma Q^m\right)(s,a'),$$

und zwar zusammen mit einer Aktualisierung der Unsicherheiten bezüglich $\pi^m$ durch Anwenden der Unsicherheitspropagation. Auf diese Weise wird eine aus der Bellman-Iteration und Unsicherheitspropagation verschränkte Iteration erzeugt.

Zur Bestimmung der Aktionsauswahlregel $\pi^m$ ist zu berücksichtigen, dass die Aktionsauswahlregel deterministisch oder stochastisch sein kann. Es kann bewiesen werden, dass die optimale Aktionsauswahlregel, welche die Q-Funktion maximiert, für Markov-Entscheidungs-Prozesse immer deterministisch ist. Für obige sicherheitsoptimale Aktionsauswahlregel ist dies jedoch nicht der Fall. Insbesondere existiert für $\xi > 0$ ein Bias zu Gunsten der Höhe von $\xi\sigma Q(s,\pi(s))$ im Vergleich zu $\xi\sigma Q(s,a), a \neq \pi(s)$, falls $\pi$ die ermittelte Aktionsauswahlregel ist, da die Bewertung $R(s,\pi(s),s')$ stärker von $V(s')=Q(s',\pi(s'))$ abhängt als $R(s,a,s'), a \neq \pi(s)$. Die Value-Funktion impliziert die Wahl einer Aktion für alle zukünftigen auftretenden Zustände s. Deshalb ist bei der Verwendung einer deterministischen Aktionsauswahlregel eine Konvergenz nicht sichergestellt. Das heißt, ein Ändern der Aktionsauswahlregel $\pi$ zu $\pi$' mit $Q(s,\pi'(s))-\xi\sigma Q(s,\pi'(s)) > Q(s,\pi(s))-\xi\sigma Q(s,\pi(s))$ könnte zu einer größeren Unsicherheit von $\pi'$ am Zustand s führen, was $Q'(s,\pi'(s))-\xi\sigma Q'(s,\pi'(s)) > Q'(s,\pi(s))-\xi\sigma Q'(s,\pi(s))$ für Q' im nächsten Iterationsschritt zur Folge hat. Dies verursacht eine Oszillation, welche durch die Verwendung einer stochastischen Aktionsauswahlregel vermieden werden kann.

Es ist intuitiv ersichtlich, dass eine sicherheitsoptimale Aktionsauswahlregel im Allgemeinen stochastisch sein muss, da der Gewinn an Performanz und ihre Unsicherheit ausgeglichen werden müssen. Das Risiko einer schlechten Aktionsauswahlregel wird schließlich auch dadurch reduziert, dass die Aktionsauswahlregel über eine Menge geeigneter Aktionen gestreut wird. Der Sicherheitsparameter $\xi$ entscheidet letztendlich über die Kosten der Sicherheit. Wenn $\xi > 0$ groß ist, dann wird die sicherheitsoptimale Aktionsauswahlregel eher stochastisch, der dadurch erreichte Gewinn an Sicherheit führt jedoch zu einer niedrigeren Performanz, während ein $\xi \leq 0$ deterministische sicherheitsoptimale Aktionsauswahlregeln garantiert. Diese sind jedoch in Bezug auf die Performanz weniger sicher, haben jedoch eine größere Chance eine bessere Performanz zu erreichen. In der hier beschriebenen Ausführungsform wird die stochastische Unsicherheit als stochastische Aktionsauswahlregel in der Bellman-Iteration wie folgt implementiert:

$$
\begin{pmatrix} Q^m \\ C^m \\ \pi^m \end{pmatrix} = \begin{pmatrix} TQ^{m-1} \\ D_{m-1}C^{m-1}D_{m-1}^T \\ \Lambda\left(\pi^{m-1}, TQ^{m-1}, m\right) \end{pmatrix},
$$

wobei

$$
\Lambda(\pi, Q, t)(s,a) = \begin{cases} \min\left(\pi(s,a)+\dfrac{1}{t}, 1\right) & : a = a_Q(s) \\ \dfrac{\max\left(1-\pi(s,a_Q(s))-\dfrac{1}{t}, 0\right)}{1-\pi(s,a_Q(s))}\pi(s,a) & : sonst \end{cases}
$$

und $a_Q(s) = \arg\max_a(Q-\xi\sigma Q)(s,a)$. Die harmonisch reduzierte Rate zur Veränderung der Aktionsauswahlwahrscheinlichkeiten garantiert sowohl die Erreichbarkeit jeder stochastischen Aktionsauswahlregel als auch die Konvergenz.

Nachfolgend wird das im Vorangegangenen beschriebene Lernen der Q-Funktion sowie der Aktionsauswahlregel nochmals zusammengefasst:

Initialisierung: Basierend auf den Trainingsdaten sind Abschätzungen für die Transitionswahrscheinlichkeiten P und die Bewertungen R sowie initiale Kovarianzmatrizen $Cov(P)$, $Cov(R)$ und $Cov(P,R)$ vorgegeben. Ferner ist ein Sicherheitsparameter $\xi$ festgelegt.

Es wird folgende Berechnung der sicherheitsoptimalen Q-Funktion und der Aktionsauswahlregel $\pi$ unter der Annahme der Beobachtungen und der A-posteriori-Parameter gegeben durch $Cov(P)$, $Cov(R)$ und $Cov(P,R)$ durchgeführt:

Setze

$$C = \begin{pmatrix} 0 & 0 & 0 \\ 0 & Cov(P) & Cov(P,R) \\ 0 & Cov(P,R)^T & Cov(R) \end{pmatrix}$$

setze

$$\forall i, j : Q(s_i, a_j) = 0, \forall i, j : \pi(s_i, a_j) = \frac{1}{|A|}, t = 0$$

Wiederhole folgende Schleife, bis erwünschte Genauigkeit erreicht ist:

setze

$$t = t + 1$$

setze

$$\forall i, j : (\sigma Q)(s_i, a_j) = \sqrt{C_{i|A|+j,i|A|+j}}$$

finde

$$\forall i : a_{i,\max} = \arg\max_{a_j} (Q - \xi \sigma Q)(s_i, a_j)$$

setze

$$\forall i : d_{i,\mathrm{diff}} = \min\left(\frac{1}{t}, 1 - \pi(s_i, a_{i,\max})\right)$$

setze

$$\forall i : \pi(s_i, a_{i,\max}) = \pi(s_i, a_{i,\max}) + d_{i,\mathrm{diff}}$$

setze

$$\forall i : \forall a_j \neq a_{i,\max} : \pi(s_i, a_j) = \frac{1 - \pi(s_i, a_{i,\max})}{1 - \pi(s, a_{i,\max}) + d_{i,\mathrm{diff}}} \pi(s_i, a_j)$$

setze

$$\forall i, j : Q'(s_i, a_j) = \sum_{k=1}^{|S|} P(s_k | s_i, a_j) \left( R(s_i, a_j, s_k) + \gamma \sum_{l=1}^{|A|} \pi(s_k, a_l) Q(s_k, a_l) \right)$$

setze

$$Q = Q'$$

setze

$$D = \begin{pmatrix} D_{Q,Q} & D_{Q,P} & D_{Q,R} \\ 0 & I & 0 \\ 0 & 0 & I \end{pmatrix}$$

setze

$$C = DCD^T$$

Ende der Schleife
gebe zurück: $Q - \xi\sigma Q$ und $\pi$

Die Zeitkomplexität des obigen Verfahrens ist höher als bei der Standard-Bellman-Iteration, welche für diskrete Markov-Entscheidungs-Prozesse $O(|S|^2|A|)$ beträgt. Der aufwändigste Prozess besteht im Aktualisieren der Kovarianzmatrix mit einer Zeitkomplexität zwischen $\Omega((|S||A|)^2 \log((|S||A|)))$ und $O((|S||A|)^{2.376})$, da jeder Eintrag von Q von höchstens $\Omega(|S|)$ Einträgen in P und R abhängt. Damit bleibt jedoch die Zeitkomplexität insgesamt durch diese Größenordnungen beschränkt. Betrachtet man die Anzahl der Aktionen als durch eine Konstante beschränkt, dann ist das hier beschriebene Verfahren mindestens um $\Omega(\log(|S|))$, höchstens jedoch um $O(|S|^{0.376})$ langsamer als die Standard-Bellman-Iteration.

Die Funktion $Q_u^\xi(s_i, a_j) = (Q^\xi - \xi\sigma Q^\xi)(s_i, a_j)$ mit $(Q^\xi, C^\xi, \pi^\xi)$ als den Fixpunkt der stochastischen verschränkten Bellman-Iteration für einen gegebenen Sicherheitsparameter $\xi \in R$ liefert die garantierte erwartete Performanz (mit einer Wahrscheinlichkeit $P(\xi)$) an den Zuständen $s_i$ unter Anwendung der Aktionen $a_j$ und unter den A-posteriori-Annahmen, die sich aus den A-priori-Annahmen und den Beobachtungen ergeben, falls nach der Aktion $a_j$ der stochastischen Aktionsauswahlregel $\pi^\xi$ gefolgt wird. Insbesondere ist diese Performanz für die spezielle Wahl des Sicherheitsparameters $\xi$ maximal.

Das erfindungsgemäße Verfahren wurde im Vorangegangenen für den diskreten Fall, d.h. für Markov-Entscheidungs-Prozesse mit endlichen Zustandsräumen beschrieben. Das Verfahren ist in einfacher Weise jedoch auch auf andere Anwendungsfälle anwendbar, bei denen die Zustände bzw. Aktionen kontinuierlich sind und der Zustandsraum bzw. Aktionsraum nicht beschränkt ist.

Mit dem im Vorangegangenen beschriebenen Verfahren lassen sich verschiedene Arten von Steuerungs- bzw. Regelungsszenarien für ein technisches System je nach Anwendungsfall realisieren.

Ein Anwendungsfall ist die Qualitätssicherung durch Unsicherheitspropagation. Mit einem positiven $\xi$ ermittelt man eine garantierte Minimalperformanz für eine gegebene oder die optimale Aktionsauswahlregel. Das Konzept der Sicherheitsoptimalität ermöglicht darüber hinaus diese Minimalperformanz zu optimieren. Die wesentliche Motivation dafür besteht darin, keine minderwertige Aktionsauswahlregel mit dem erfindungsgemäßen Verfahren zu erzeugen und das Risiko zu verringern, eine ungeeignete Aktionsauswahlregel trotz des Anscheins einer guten Performanz zu erhalten. Gerade der Zugriff auf eine konkrete Quantisierung der Unsicherheit ermöglicht ein Urteil über die Vertrauenswürdigkeit des Ergebnisses. Ist die garantierte Performanz an einem spezifizierten Startzustand unzureichend, müssen weitere Beobachtungen in Form von Trainingsdaten von dem technischen System gesammelt werden.

Falls die Exploration teuer ist, das zu steuernde technische System jedoch sicherheitskritisch ist, so dass eine gewisse Performanzwahrscheinlichkeit definitiv erfüllt sein muss, dann ist es sinnvoll, sich das Konzept der Sicherheitsoptimalität zunutze zu machen. Man gibt die Optimalität des Erwartungswertes zu Gunsten der Optimalität an ein spezifiziertes Perzentil (d.h. an einen bestimmten Prozentsatz von möglichen verbesserten Q-Werten) auf.

Ein zweiter Anwendungsfall ist der symmetrische Fall von Wettkämpfen und Explorationen. Dabei nutzt man für negative $\xi$ die Unsicherheit in entgegengesetzter Weise durch Ausnutzen der Chance auf eine hohe Performanz. Dies ist von besonderem Interesse für eine zielgerichtete Exploration, so dass verstärkt Zustands-Aktions-Paare exploriert werden, für die $Q_u^\xi(s,a)$ groß ist, da der Schätzer für den entsprechenden Q-Wert bereits groß ist, aber die wahre Performanz noch wesentlich besser sein könnte.

Ein weiteres Anwendungsfeld besteht in Wettkampfsituationen, die sich genau symmetrisch zur Qualitätssicherung beschreiben lassen. Es soll dabei einer Aktionsauswahlregel gefolgt werden, welche die Chance bietet, außerordentlich gut abzuschneiden und schließlich den Wettkampf zu gewinnen. Auch in diesem Fall kommt das Konzept der Sicherheitsoptimalität ins Spiel, da nicht die erwartete Performanz, sondern die Perzentil-Performanz das entscheidende Kriterium ist und maximiert werden soll.

Ein weiterer Anwendungsfall ist die Steigerung der Informationseffizienz in praktischen Anwendungen. Neben der Qualitätssicherung besteht ein Hauptziel des hier beschriebenen Verfahrens in der Verbesserung der Informationseffizienz. Das Berücksichtigen von Unsicherheiten kann bei bestärkenden Lernverfahren selbst die erwartete Performanz konkreter Markov-Entscheidungs-Prozesse in vielen praktischen und industriellen Anwendungen verbessern, bei denen Exploration teuer und nur in begrenztem Umfang um vorgesehene Arbeitspunkte möglich ist. Die verfügbare Datenmenge ist daher gering und die Exploration findet in einer, zum Teil extrem asymmetrischen Weise statt, so dass Daten ausschließlich in Zustandsbereichen gesammelt werden, für die in dem technischen System bereits bevorzugt operiert wird. Viele dieser unzureichend explorierten sog. Randzustände sind zwar unerwünscht im Erwartungswert, aber nicht zwangsläufig im Einzelfall. Wenn der Rand hinreichend groß ist, dann geschieht es wenigstens einige Male, dass einer der Ausreißer eine hohe Bewertung vortäuscht. Es ist zu beachten, dass die Größe der Randregion mit der Dimensionalität des Zustandsraums ansteigt. Daher führt ein umsichtiges Berücksichtigen der Unsicherheit dazu, dass das Verfahren solche Ausreißer in seiner Aktionsauswahlregel unberücksichtigt lässt und Aktionen ausführt, die gesichert eine hohe Performanz zur Folge haben.

Die obige Ausführungsform des erfindungsgemäßen Verfahrens wurde auf eine Gasturbinen-Steuerung mit einem kontinuierlichen Zustandsraum und einer endlichen Menge an Aktionen angewendet. Der interne Zustandsraum wurde in Abhängigkeit von drei Präzisionen, nämlich der Präzision C = Coarse (entspricht 256 Zuständen), der Präzision M = Medium (entspricht 625 Zuständen) und der Präzision F = Fine (entspricht 1296 Zuständen) angewendet. Der hochdimensionale Zustandsraum wurde dabei auf einen genäherten vier-dimensionalen Markov-Zustands-Raum reduziert. Eine genaue Beschreibung des Problems und der Konstruktion des minimalen Markov-Zustands-Raums findet sich in der Druckschrift [1].

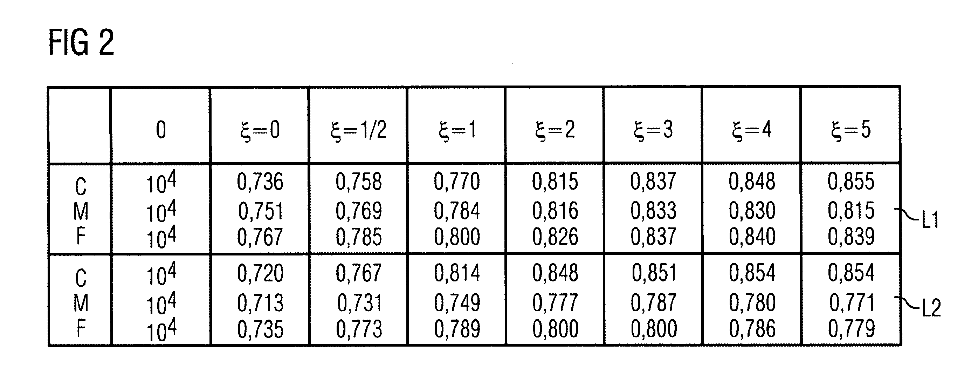

Die ermittelten Performanzen (50 Durchläufe mit kurzen zufälligen Episoden, welche an unterschiedlichen Betriebspunkten beginnen) sind in der Tabelle gemäß Fig. 2 als gemittelte Bewertungen wiedergegeben. In der Zeile L1 wurde dabei eine frequentistische Modellierung der Transitionswahrscheinlichkeiten verwendet, wohingegen in der Zeile L2 eine Bayesianische Modellierung eingesetzt wurde. Die Bewertungen wurden mit einer uniformierten Normal-Gamma-Verteilung als Conjugate Prior mit $\sigma = \infty$ und $\alpha = \beta = 0$ abgeschätzt. In den jeweiligen Zeilen L1 und L2 finden sich die Ergebnisse für die grobe Diskretisierung C, die mittlere Diskretisierung M und die feine Diskretisierung F. In der Spalte O sind die Anzahl an Beobachtungen angegeben, welche immer bei $10^4$ liegen. In den rechts von der Spalte O liegenden Spalten sind die durchschnittlichen Performanzen in der Form der gemittelten Bewertungen für unterschiedliche Werte des Sicherheitsparameters $\xi$ wiedergegeben, wobei $\xi = 0$ der klassischen Bestimmung der Aktionsauswahlregel gemäß der Standard-Bellman-Iteration entspricht. Die Performanz ist am größten mit der groben Diskretisierung C. Gemittelt über alle Diskretisierungen ist das Ergebnis des frequentistischen Ansatzes besser als das des Bayesianischen Ansatzes. Die insgesamt beste Performanz wird mit der groben Diskretisierung C des frequentistischen Ansatzes mit $\xi = 5$ erreicht, jedoch liefert auch der Bayesianische Ansatz mit $\xi = 3$ vergleichbare Ergebnisse. Aus Fig. 2 erkennt man insbesondere, dass die mit dem erfindungsgemäßen Verfahren (d.h. $\xi \neq 0$) erreichte Performanz besser ist als die mit den herkömmlichen Verfahren ($\xi=0$) erreichte Performanz.

Literaturverzeichnis:

[1] Anton Maximilian Schaefer, Daniel Schneegass, Volkmar Sterzing und Steffen Udluft: A neural reinforcement learning approach to gas turbine control. In Proc. of the International Joint Conference on Neural Networks, 2007.

**Patentansprüche**

1. Verfahren zum rechnergestützten Lernen einer Steuerung und/oder Regelung eines technischen Systems, wobei der Betrieb des technischen Systems charakterisiert ist durch Zustände (s), welche das technische System im Betrieb einnehmen kann, und Aktionen, welche während der Betriebs des technischen Systems ausgeführt werden und einen jeweiligen Zustand (s) des technischen Systems in einen Folgezustand überführen, bei dem:

   - basierend auf im Betrieb des technischen Systems erfassten Trainingsdaten umfassend Zustände (s), Aktionen (a) und Folgezustände (s') eine Qualitätsfunktion (Q) und eine Aktionsauswahlregel ($\pi$(s)) gelernt werden, wobei die Qualitätsfunktion (Q) einen Optimalbetrieb des technischen Systems modelliert und die Aktionsauswahlregel ($\pi$(s)) im Betrieb des technischen Systems für einen jeweiligen Zustand (s) des technischen Systems die bevorzugt auszuführende Aktion (a) oder auszuführenden Aktionen (a) angibt;
   - während des Lernens der Qualitätsfunktion (Q) und der Aktionsauswahlregel ($\pi$(s)) ein Maß (oQ) für die statistische Unsicherheit der Qualitätsfunktion (Q) mittels einer Gaußschen Fehlerfortpflanzung ermittelt wird und in Abhängigkeit von dem Maß ($\sigma$Q) für die statistische Unsicherheit und einem Sicherheitsparameter ($\xi$), der einer statistischen Mindestanforderung an die Qualitätsfunktion (Q) entspricht, eine modifizierte Qualitätsfunktion bestimmt wird;
   - wobei die Aktionsauswahlregel ($\pi$(s)) basierend auf der modifizierten Qualitätsfunktion gelernt wird.

2. Verfahren nach Anspruch 1, bei dem die Qualitätsfunktion (Q) unter Berücksichtigung von Bewertungen (R) und Zustands-Aktions-Wahrscheinlichkeiten (P) gelernt wird, wobei eine jeweilige Bewertung (R) die Qualität einer Kombination aus Zustand (s), in dem Zustand ausgeführter Aktion (a) und Folgezustand (s') im Hinblick auf den Optimalbetrieb des technischen Systems bewertet und eine jeweilige Zustands-Aktions-Wahrscheinlichkeit (P) in Abhängigkeit von einem Zustand und der in dem Zustand ausgeführten Aktion (a) die Wahrscheinlichkeit (P) eines Folgezustands (s') angibt.

3. Verfahren nach Anspruch 2, bei dem die Zustands-Aktions-Wahrscheinlichkeiten (P) als eine Zustands-Aktions-Wahrscheinlichkeitsverteilung modelliert werden und/oder die Bewertungen (R) als eine Bewertungs-Wahrscheinlichkeitsverteilung modelliert werden.

4. Verfahren nach Anspruch 3, bei dem die Zustands-Aktions-Wahrscheinlichkeitsverteilung und/oder die Bewertungs-Wahrscheinlichkeitsverteilung als relative Häufigkeiten aus den Trainingsdaten modelliert werden.

5. Verfahren nach Anspruch 3 oder 4, bei dem die Zustands-Aktions-Wahrscheinlichkeitsverteilung und/oder die Bewertungs-Wahrscheinlichkeitsverteilung basierend auf einer A-priori-Verteilung mit A-posteriori-Parametern abgeschätzt werden, wobei die A-posteriori-Parameter von den Trainingsdaten abhängen.

6. Verfahren nach Anspruch 5, wobei die A-priori-Verteilung eine Dirichlet-Verteilung und/oder eine Normalverteilung ist.

7. Verfahren nach einem der vorhergehenden Ansprüche, bei dem die Qualitätsfunktion (Q) und die Aktionsauswahlregel (n(s)) basierend auf der Bellmann-Iteration gelernt werden, wobei in jedem Iterationsschritt eine neue Qualitätsfunktion (Q) und ein neues Maß für die statistische Unsicherheit der Qualitätsfunktion (Q) und hierdurch eine neue modifizierte Qualitätsfunktion bestimmt wird.

8. Verfahren nach Anspruch 7 in Kombination mit einem der Ansprüche 2 bis 6, bei dem in jedem Iterationsschritt der Bellmann-Iteration zur Bestimmung eines neuen Maßes für die statistische Unsicherheit eine Kovarianzmatrix in Abhängigkeit von der in dem Iterationsschritt bestimmten Qualitätsfunktion (Q), den Zustands-Aktions-Wahrscheinlichkeiten (P) und den Bewertungen (R) ermittelt wird.

9. Verfahren nach einem der vorhergehenden Ansprüche, bei dem die zu lernende Aktionsauswahlregel eine stochastische Aktionsauswahlregel ($\pi$(s)) ist, welche für einen Zustand (s) des technischen Systems eine Wahrscheinlichkeitsverteilung für die ausführbaren Aktionen (a) angibt.

10. Verfahren nach Anspruch 9 in Kombination mit Anspruch 7 oder 8, bei dem in jedem Iterationsschritt der Bellmann-Iteration als neue Wahrscheinlichkeitsverteilung für die ausführbaren Aktionen (a) eine Wahrscheinlichkeitsverteilung ermittelt wird, welche die Wahrscheinlichkeitsverteilung des letzten Iterationsschritts derart modifiziert, dass der Aktion (a), welche den Wert der modifizierten Qualitätsfunktion maximiert, eine höhere Wahrscheinlichkeit zugewiesen wird.

**11.** Verfahren nach einem der vorhergehenden Ansprüche, bei dem basierend auf dem Sicherheitsparameter (ξ) die statistische Mindestanforderung an die Qualitätsfunktion (Q) ermittelt wird.

**12.** Verfahren nach Anspruch 11, bei dem die statistische Mindestanforderung an die Qualitätsfunktion (Q) durch einen Mindestqualitätsfunktionswert und einen Wahrscheinlichkeitswert repräsentiert wird, wobei der Wahrscheinlichkeitswert angibt, mit welcher Wahrscheinlichkeit der Wert der Qualitätsfunktion größer oder gleich dem Mindestqualitätsfunktionswert ist.

**13.** Verfahren nach Anspruch 11 oder 12, bei dem zur Ermittlung der statistischen Mindestanforderung an die Qualitätsfunktion (Q) eine Gaußsche Verteilung für die Qualitätsfunktion (Q) angenommen wird.

**14.** Verfahren nach einem der vorhergehenden Ansprüche, bei dem mit dem Verfahren eine Steuerung und/oder Regelung einer Turbine, insbesondere einer Gasturbine, gelernt wird.

**15.** Verfahren zum Betrieb eines technischen Systems, bei dem das technische System basierend auf einer mit einem Verfahren nach einem der vorhergehenden Ansprüche gelernten Steuerung und/oder Regelung betrieben wird, indem mit der gelernten Aktionsauswahlregel in einem jeweiligen Zustand (s) des technischen Systems die auszuführende Aktion (a) ausgewählt wird.

**16.** Verfahren nach Anspruch 15, bei dem während des Betriebs des technischen Systems das Verfahren nach einem der Ansprüche 1 bis 14 wiederholt wird, wobei bei jeder Wiederholung die neu vom technischen System eingenommenen Zustände (s) und durchgeführte Aktionen (a) als Trainingsdaten berücksichtigt werden.

**17.** Computerprogrammprodukt mit einem auf einem maschinenlesbaren Träger gespeicherten Programmcode zur Durchführung eines Verfahrens nach einem der vorhergehenden Ansprüche, wenn das Programm auf einem Rechner abläuft.

**Claims**

**1.** Method for the computer-aided learning of open- and/or closed-loop control of a technical system, wherein the operation of the technical system is **characterised by** states (s) which the technical system can assume during operation as well as actions which are executed during operation of the technical system and cause a transition from a given state (s) of the technical system into a subsequent state, wherein:

- a quality function (Q) and an action selection rule (π(s)) are learned on the basis of training data captured during operation of the technical system and comprising states (s), actions (a) and subsequent states (s'), wherein the quality function (Q) models an optimal mode of operation of the technical system and the action selection rule (n(s)) specifies the preferred action (a) or actions (a) that are to be executed for a particular state (s) of the technical system during operation of the technical system;
- during the learning of the quality function (Q) and the action selection rule (π(s)), a metric (σQ) for the statistical uncertainty of the quality function (Q) is ascertained by means of Gaussian error propagation and a modified quality function is determined as a function of the metric (σQ) for the statistical uncertainty and a certainty parameter (ξ) which corresponds to a statistical minimum requirement for the quality function (Q); and
- wherein the action selection rule (π(s)) is learned on the basis of the modified quality function.

**2.** Method according to claim 1, wherein the quality function (Q) is learned while taking into account evaluations (R) and state-action probabilities (P), with a given evaluation (R) rating the quality of a combination of state (s), action (a) executed in that state and subsequent state (s') with regard to the optimal mode of operation of the technical system and a given state-action probability (P) indicating the probability (P) of a subsequent state (s') as a function of a state and the action (a) executed in that state.

**3.** Method according to claim 2, wherein the state-action probabilities (P) are modelled as a state-action probability distribution and/or the evaluations (R) are modelled as an evaluation probability distribution.

**4.** Method according to claim 3, wherein the state-action probability distribution and/or the evaluation probability distribution are modelled as relative frequencies from the training data.

5. Method according to claim 3 or 4, wherein the state-action probability distribution and/or the evaluation probability distribution are estimated on the basis of an a priori distribution with a posteriori parameters, with the a posteriori parameters being dependent on the training data.

6. Method according to claim 5, wherein the a priori distribution is a Dirichlet distribution and/or a normal distribution.

7. Method according to one of the preceding claims, wherein the quality function (Q) and the action selection rule ($\pi$(s)) are learned on the basis of the Bellman iteration, with a new quality function (Q) and a new metric for the statistical uncertainty of the quality function (Q), and hence a new modified quality function, being determined in each iteration step.

8. Method according to claim 7 in combination with one of claims 2 to 6, wherein, in each iteration step of the Bellman iteration, for the purpose of determining a new metric for the statistical uncertainty, a covariance matrix is ascertained as a function of the quality function (Q) determined in the iteration step, the state-action probabilities (P) and the evaluations (R).

9. Method according to one of the preceding claims, wherein the action selection rule that is to be learned is a stochastic action selection rule ($\pi$(s)) which specifies a probability distribution for the executable actions (a) for a state (s) of the technical system.

10. Method according to claim 9 in combination with claim 7 or 8, wherein, in each iteration step of the Bellman iteration, as a new probability distribution for the executable actions (a), a probability distribution is ascertained which modifies the probability distribution of the last iteration step in such a way that the action (a) which maximises the value of the modified quality function is assigned a higher probability.

11. Method according to one of the preceding claims, wherein the statistical minimum requirement for the quality function (Q) is ascertained on the basis of the certainty parameter ($\xi$).

12. Method according to claim 11, wherein the statistical minimum requirement for the quality function (Q) is represented by a minimum quality function value and a probability value, with the probability value specifying the probability with which the value of the quality function is greater than or equal to the minimum quality function value.

13. Method according to claim 11 or 12, wherein a Gaussian distribution for the quality function (Q) is assumed for the purpose of ascertaining the statistical minimum requirement for the quality function (Q).

14. Method according to one of the preceding claims, wherein open- and/or closed-loop control of a turbine, in particular a gas turbine, is learned by means of the method.

15. Method for operating a technical system, wherein the technical system is operated on the basis of open- and/or closed-loop control which is learned by means of a method according to one of the preceding claims, in that the action (a) that is to be executed is selected by means of the learned action selection rule in a given state (s) of the technical system.

16. Method according to claim 15, wherein the method according to one of claims 1 to 14 is repeated during operation of the technical system, with the states (s) that have been newly assumed by the technical system and executed actions (a) being taken into account as training data during each repetition.

17. Computer program product comprising a program code stored on a machine-readable medium for performing a method according to one of the preceding claims when the program executes on a computer.

**Revendications**

1. Procédé d'apprentissage assisté par ordinateur d'une commande et/ou d'une régulation d'un système technique, le fonctionnement du système technique étant **caractérisé par** des états (s) que peut prendre le système technique en cours de fonctionnement et par des actions qui sont exécutées pendant le fonctionnement du système technique et qui font passer un état respectif (s) du système technique à un état subséquent, selon lequel :

- une fonction de qualité (Q) et une règle de sélection d'action ($\pi$(s)) sont apprises sur la base de données d'apprentissage saisies pendant le fonctionnement du système technique et comprenant des états (s), des actions (a) et des états subséquents (s'), la fonction de qualité (Q) modélisant un fonctionnement optimal du système technique et la règle de sélection d'action ($\pi$(s)) indiquant, pendant le fonctionnement du système technique, pour un état respectif (s) du système technique, l'action (a) ou les actions (a) à exécuter préférentiellement ;
- une mesure ($\sigma$Q) de l'insécurité statistique de la fonction de qualité (Q) est déterminée au moyen d'une propagation d'erreur gaussienne pendant l'apprentissage de la fonction de qualité (Q) et de la règle de sélection d'action ($\pi$(s)) et une fonction de qualité modifiée est déterminée en fonction de la mesure ($\sigma$Q) de l'insécurité statistique et en fonction d'un paramètre de sécurité ($\xi$) qui correspond à une exigence statistique minimale relative à la fonction de qualité (Q) ;
- la règle de sélection d'action ($\pi$(s)) étant apprise sur la base de la fonction de qualité modifiée.

2. Procédé selon la revendication 1, selon lequel la fonction de qualité (Q) est apprise compte tenu d'évaluations (R) et de probabilités d'états et d'actions (P), une évaluation respective (R) évaluant la qualité d'une combinaison d'un état (s), d'une action (a) exécutée dans cet état et d'un état subséquent (s') au regard du fonctionnement optimal du système technique et une probabilité respective d'états et d'actions (P) indiquant, en fonction d'un état et de l'action (a) exécutée dans cet état, la probabilité (P) d'un état subséquent (s').

3. Procédé selon la revendication 2, selon lequel les probabilités d'états et d'actions (P) sont modélisées sous la forme d'une distribution de probabilités d'états et d'actions et/ou les évaluations (R) sont modélisées sous la forme d'une distribution de probabilités d'évaluations.

4. Procédé selon la revendication 3, selon lequel la distribution de probabilités d'états et d'actions et/ou la distribution de probabilités d'évaluations sont modélisées sous la forme de fréquences relatives à partir des données d'apprentissage.

5. Procédé selon la revendication 3 ou 4, selon lequel la distribution de probabilités d'états et d'actions et/ou la distribution de probabilités d'évaluations est estimée sur la base d'une distribution a priori avec des paramètres a posteriori, les paramètres a posteriori dépendant des données d'apprentissage.

6. Procédé selon la revendication 5, la distribution a priori étant une distribution de Dirichlet et/ou une distribution normale.

7. Procédé selon l'une des revendications précédentes, selon lequel la fonction de qualité (Q) et la règle de sélection d'action ($\pi$(s)) sont apprises sur la base de l'itération de Bellmann, une nouvelle fonction de qualité (Q) et une nouvelle mesure de l'insécurité statistique de la fonction de qualité (Q) et, de ce fait, une nouvelle fonction de qualité modifiée étant déterminées à chaque étape d'itération.

8. Procédé selon la revendication 7 en combinaison avec l'une des revendications 2 à 6, selon lequel, à chaque étape d'itération de l'itération de Bellmann, pour déterminer une nouvelle mesure de l'insécurité statistique, une matrice de covariance est déterminée en fonction de la fonction de qualité (Q) déterminée à l'étape d'itération, des probabilités d'états et d'actions (P) et des évaluations (R).

9. Procédé selon l'une des revendications précédentes, selon lequel la règle de sélection d'action à apprendre est une règle de sélection d'action stochastique ($\pi$(s)) qui, pour un état (s) du système technique, indique une distribution de probabilités pour les actions exécutables (a).

10. Procédé selon la revendication 9 en combinaison avec l'une des revendications 7 ou 8, selon lequel est déterminée en tant que nouvelle distribution de probabilités pour les actions exécutables (a), à chaque étape d'itération de l'itération de Bellmann, une distribution de probabilités qui modifie la distribution de probabilités de la dernière étape d'itération de manière telle qu'une probabilité supérieure est affectée à l'action (a) qui maximise la valeur de la fonction de qualité modifiée.

11. Procédé selon l'une des revendications précédentes, selon lequel l'exigence statistique minimale relative à la fonction de qualité (Q) est déterminée sur la base du paramètre de sécurité ($\xi$).

**12.** Procédé selon la revendication 11, selon lequel l'exigence statistique minimale relative à la fonction de qualité (Q) est représentée par une valeur de fonction de qualité minimale et une valeur de probabilité, la valeur de probabilité indiquant avec quelle probabilité la valeur de la fonction de qualité est supérieure ou égale à la valeur de fonction de qualité minimale.

**13.** Procédé selon la revendication 11 ou 12, selon lequel on admet, pour déterminer l'exigence statistique minimale relative à la fonction de qualité (Q), une distribution gaussienne pour la fonction de qualité (Q).

**14.** Procédé selon l'une des revendications précédentes, selon lequel le procédé permet d'apprendre une commande et/ou une régulation d'une turbine, et plus particulièrement d'une turbine à gaz.

**15.** Procédé pour exploiter un système technique, selon lequel le système technique est exploité sur la base d'une commande et/ou d'une régulation apprises au moyen d'un procédé selon l'une des revendications précédentes par sélection de l'action à exécuter (a), au moyen de la règle de sélection d'action apprise, dans un état respectif (s) du système technique.

**16.** Procédé selon la revendication 15, selon lequel le procédé selon l'une des revendications 1 à 14 est répété pendant le fonctionnement du système technique, les états (s) pris nouvellement par le système technique et des actions exécutées (a) étant prises en compte à chaque répétition comme données d'apprentissage.

**17.** Produit de programme informatique avec un code de programme stocké sur un support lisible par machine pour exécuter un procédé selon l'une des revendications précédentes lorsque le programme est exécuté sur un ordinateur.

# FIG 1

## FIG 2

| | 0 | $\xi=0$ | $\xi=1/2$ | $\xi=1$ | $\xi=2$ | $\xi=3$ | $\xi=4$ | $\xi=5$ | |
|---|---|---|---|---|---|---|---|---|---|
| C | $10^4$ | 0,736 | 0,758 | 0,770 | 0,815 | 0,837 | 0,848 | 0,855 | |
| M | $10^4$ | 0,751 | 0,769 | 0,784 | 0,816 | 0,833 | 0,830 | 0,815 | L1 |
| F | $10^4$ | 0,767 | 0,785 | 0,800 | 0,826 | 0,837 | 0,840 | 0,839 | |
| C | $10^4$ | 0,720 | 0,767 | 0,814 | 0,848 | 0,851 | 0,854 | 0,854 | |
| M | $10^4$ | 0,713 | 0,731 | 0,749 | 0,777 | 0,787 | 0,780 | 0,771 | L2 |
| F | $10^4$ | 0,735 | 0,773 | 0,789 | 0,800 | 0,800 | 0,786 | 0,779 | |

EP 2 112 569 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **E. DELAGE ; S. MANNOR.** Percentile Optimization in Uncertain Markov Decision Processes with Application to Efficient Exploration. *Proc. of the International Conference on Machine Learning,* 2007, 225-232
- **ERIC TUTTLE ; ZOUBIN GHAHRAMANI.** *Propagating Uncertainty in POMPD Value Iteration with Gaussian Processes,* 30. November 2004, 1-11

- **ANTON MAXIMILIAN SCHAEFER ; DANIEL SCHNEEGASS ; VOLKMAR STERZING ; STEFFEN UDLUFT.** A neural reinforcement learning approach to gas turbine control. *Proc. of the International Joint Conference on Neural Networks,* 2007